(19) Europäisches Patentamt / European Patent Office / Office européen des brevets

(11) **EP 1 852 280 A1**

(12) **DEMANDE DE BREVET EUROPEEN**

(43) Date de publication:
**07.11.2007 Bulletin 2007/45**

(51) Int Cl.:
**B60C 23/20** (2006.01)   **B60C 23/00** (2006.01)

(21) Numéro de dépôt: **07290509.4**

(22) Date de dépôt: **24.04.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **04.05.2006 FR 0604000**

(71) Demandeurs:
• **Société de Technologie Michelin**
**63000 Clermont-Ferrand (FR)**
• **Michelin Recherche et Technique S.A.**
**1763 Granges-Paccot (CH)**

(72) Inventeurs:
• **Bougeard, Maud**
**63530 Volvic (FR)**
• **Francois, Jean-Pierre**
**63540 Romagnat (FR)**
• **Marchand, Julien**
**63400 Chamalieres (FR)**

(74) Mandataire: **Bentz, Jean-Paul et al**
**Novagraaf Technologies,**
**122, rue Edouard Vaillant**
**92593 Levallois-Perret Cedex (FR)**

(54) **Procédé de surveillance de l'état opérationnel d'un pneumatique**

(57) L'invention concerne un procédé de surveillance de l'état opérationnel d'un pneumatique équipant un véhicule, ce procédé comprenant au moins les étapes consistant à produire, au cours du temps, des échantillons représentatifs de valeurs successives prises par une grandeur physique évoluant, à des conditions par ailleurs égales, en fonction du nombre de moles de fluide gazeux présentes dans ce pneumatique, à exploiter ces échantillons pour en déduire un état estimé du pneumatique et le comparer à un domaine de conditions normales de roulement, et à produire une alarme dans le cas où l'état estimé du pneumatique se situe en dehors du domaine de ces conditions normales.

Selon l'invention, l'étape d'exploitation des échantillons comprend une opération consistant à comparer à une valeur limite prédéterminée (L) la valeur d'un indicateur de dispersion de la grandeur physique, tel que la variance de cette grandeur.

Fig. 3D

EP 1 852 280 A1

## Description

L'invention concerne, de façon générale, les techniques liées à la sécurisation des véhicules automobiles.

Plus précisément, l'invention concerne un procédé de surveillance de l'état opérationnel d'un pneumatique équipant un véhicule, ce procédé comprenant au moins les étapes consistant à produire, au cours du temps, des échantillons représentatifs de valeurs successives prises par une grandeur physique évoluant, à des conditions par ailleurs égales, en fonction du nombre de moles de fluide gazeux présentes dans ce pneumatique, à exploiter ces échantillons pour en déduire un état estimé du pneumatique et le comparer à un domaine de conditions normales de roulement, et à produire une alarme dans le cas où l'état estimé du pneumatique se situe en dehors du domaine de ces conditions normales.

Un procédé de ce type est par exemple connu de l'homme du métier par le document de brevet FR 2 622 845.

Conformément à ce procédé connu, l'état d'un pneumatique du véhicule est comparé à l'état d'un autre pneumatique de ce même véhicule pris comme référence, la divergence des états respectifs des pneumatiques comparés conduisant à la mise en évidence d'une anomalie.

En dépit de son intérêt, cette technique souffre de plusieurs limitations.

D'une part, en effet, ce procédé connu permet difficilement de détecter un défaut affectant de façon relativement équilibrée les pneumatiques comparés.

D'autre part, ce procédé connu peut prendre pour une anomalie des écarts normaux entre les états des pneumatiques comparés, tels que l'écart susceptible de résulter du fait que l'un des pneumatiques est exposé au soleil alors que l'autre est à l'ombre.

Bien que l'homme du métier connaisse aussi, par le brevet US 6 246 317, un procédé plus performant de surveillance de l'état des pneumatiques d'un véhicule, aucun procédé connu ne permet une discrimination totalement efficace des différents états d'un pneumatique.

Dans ce contexte, l'invention a pour but de proposer un procédé de surveillance de l'état opérationnel d'un pneumatique qui réponde à ce besoin.

A cette fin, le procédé de l'invention, par ailleurs conforme à la définition générique qu'en donne le préambule ci-dessus, est essentiellement caractérisé en ce que l'étape d'exploitation des échantillons comprend au moins une opération consistant à comparer un indicateur de dispersion de ladite grandeur physique à une valeur limite prédéterminée, en ce que la grandeur physique utilisée est constituée par le rapport de la température du fluide gazeux à sa pression, et en ce que l'alarme indique une fuite du pneumatique au moins dans un cas où, à la fois, cette grandeur physique augmente alors que sa variance dépasse la valeur limite prédéterminée.

L'indicateur de dispersion de la grandeur physique est par exemple constitué par la variance de cette grandeur, ou par son écart-type.

La grandeur physique utilisée est de préférence choisie dans l'ensemble comprenant la pression du fluide gazeux, le rapport de la température du fluide gazeux à sa pression, et le rapport de la pression du fluide gazeux à sa température.

L'étape d'exploitation des échantillons comprend par exemple des opérations préalables de mise en forme consistant à calculer au moins une moyenne sur p1 échantillons successifs de la grandeur physique, et à calculer une valeur glissante de l'indicateur de dispersion de la grandeur physique sur q1 moyennes, p1 et q1 étant des nombres entiers supérieurs à 1.

Chaque nouveau calcul de la moyenne est avantageusement effectué sur p1 nouveaux échantillons de la grandeur physique, différents des p1 échantillons utilisés pour le calcul précédent de cette moyenne, et la valeur glissante de l'indicateur de dispersion de la grandeur physique est recalculée à chaque nouveau calcul de la moyenne.

Pour pouvoir surveiller l'apparition éventuelle de défauts de différents types, il est possible de prévoir que l'étape d'exploitation des échantillons comprenne des opérations préalables de mise en forme consistant à calculer en parallèle k moyennes sur des nombres respectifs différents pk d'échantillons différents de la grandeur physique, et à calculer k valeurs glissantes de l'indicateur de dispersion de la grandeur physique sur des nombres respectifs différents qk de moyennes différentes, k, pk et qk étant des nombres entiers supérieurs à 1.

En outre, l'étape d'exploitation des échantillons peut comprendre une opération consistant à prendre en compte le signe de l'évolution de la grandeur physique et / ou la vitesse du véhicule pour distinguer, en cas d'alarme, entre deux états estimés différents du pneumatique.

Dans le cas où la grandeur physique utilisée est constituée par le rapport de la température du fluide gazeux à sa pression, l'alarme indique un regonflage du pneumatique au moins dans un cas où, à la fois, cette grandeur physique diminue alors que sa variance dépasse la valeur limite prédéterminée et que le véhicule a une vitesse nulle.

Le procédé de surveillance de l'invention est très avantageusement appliqué à un pneumatique renfermant un boudin mousse susceptible de venir en contact avec la face interne de ce pneumatique.

Dans ce cas, et si la grandeur physique est constituée par le rapport de la température du fluide gazeux à sa pression, l'alarme indique un contact du boudin mousse avec la face interne du pneumatique au moins dans un cas où, à la fois, cette grandeur physique diminue alors que sa variance dépasse la valeur limite prédéterminée et que le véhicule a une vitesse non nulle.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en coupe de la partie inférieure d'un pneumatique équipé d'un boudin mousse et représenté dans un état de fonctionnement normal;

- la figure 2 est une vue en coupe de la partie inférieure du pneumatique illustré à la figure 1 et représenté dans un état de défaillance ayant conduit à l'expansion du boudin mousse; et

- les figures 3A à 3D sont des diagrammes représentant respectivement, en fonction du temps t, l'évolution de la pression P, de la température T, du rapport T/P de la température à la pression, et de la variance $S^2$ (T/P) du rapport T/P de la température à la pression dans un pneumatique équipé d'un boudin mousse et subissant une avarie.

Comme indiqué précédemment, l'invention concerne un procédé de surveillance de l'état opérationnel d'un pneumatique 1 équipant un véhicule.

Ce procédé comprend typiquement une étape d'acquisition consistant à produire, au cours du temps, des échantillons G(n) représentatifs de valeurs successives prises à des instants d'échantillonnage n par une grandeur physique G liée à l'état du pneumatique 1, une étape d'exploitation consistant à exploiter ces échantillons G(n) pour en déduire un état estimé du pneumatique 1 et le comparer à un domaine de conditions normales de roulement, et une étape de signalisation consistant à produire une alarme dans le cas où l'état estimé du pneumatique 1 se situe en dehors du domaine de ces conditions normales, notamment en raison d'une fuite.

La grandeur physique G est plus précisément choisie pour évoluer, à des conditions par ailleurs égales, en fonction du nombre de moles N de fluide gazeux présentes dans ce pneumatique 1, de manière à permettre l'utilisation de la loi de Mariotte qui lie la pression P, le volume V, le nombre de moles N et la température T d'un gaz parfait contenu dans une enceinte par la relation :

$$P.V = N.R.T,$$

où R est une constante thermodynamique bien connue de l'homme du métier.

Selon l'invention, l'étape d'exploitation des échantillons comprend au moins une opération consistant à comparer la valeur d'un indicateur de dispersion de la grandeur physique G à une valeur limite L par exemple obtenue de manière expérimentale et en tout cas prédéterminée.

Ainsi, contrairement au procédé connu du brevet précité, le procédé de l'invention, qui exploite la grandeur physique G par l'intermédiaire d'un indicateur de dispersion, se libère de la nécessité de comparer l'état de chaque pneumatique du véhicule à l'état d'un autre pneumatique de ce même véhicule.

L'indicateur de dispersion de la grandeur physique G est par exemple constitué par la variance $S^2_1$ (G) de cette grandeur, ou par son écart-type.

Le procédé de l'invention fournit les meilleurs résultats dans le cas où la grandeur physique G utilisée est constituée par la pression P du fluide gazeux, ou par le rapport T/P de la température T du fluide gazeux à sa pression P, ou encore par le rapport P/T de la pression P du fluide gazeux à sa température T.

L'étape d'exploitation des échantillons G(n) comprend des opérations préalables de calcul permettant d'obtenir la variance $S^2_1$ (G) de la grandeur physique G.

Pour ce faire, il est possible, après l'acquisition de p1 échantillons G(n) de la grandeur G, de calculer une moyenne $M_{1j}$ telle que :

$$M_{1j} = \sum_{n=j-p1}^{j} G(n) \quad / \quad p1$$

où p1 nombre entier supérieur à 1.

A l'obtention de chaque nouvelle valeur de la moyenne $M_{1j}$, une nouvelle valeur de la variance est calculée par application de la formule :

$$S^2 1 (G) = \sum_{k=j-q1}^{j} \frac{(M1k - m_j)^2}{q1 - 1}$$

où q1 est un nombre entier supérieur à 1, et où $m_j$ est la moyenne des q1 moyennes M1k, à savoir:

$$m_j = \sum_{n=j-q1}^{j} M1k \quad / \quad q1.$$

En pratique, il est souhaitable de calculer chaque nouvelle valeur de la moyenne $M_{1j}$ au moyen de p1 nouveaux échantillons de la grandeur G, différents des p1 échantillons utilisés pour le calcul de la valeur précédente de la moyenne $M_{1,j-p1}$.

En outre, une nouvelle valeur de la variance est de préférence calculée à l'obtention de chaque nouvelle valeur de la moyenne.

Le procédé de l'invention permet notamment de déceler une éventuelle fuite du pneumatique.

Pour optimiser la détection et l'adapter à la gravité de la fuite qui peut être plus ou moins rapide, il peut être judicieux de surveiller non pas une seule valeur de la variance de la grandeur G, mais plusieurs valeurs de cette variance.

Pour ce faire, il est par exemple envisageable de calculer en parallèle k moyennes, telles que $M_{lj}$ à $M_{kj}$, de la grandeur physique G sur des nombres respectifs différents pk d'échantillons successifs G(n) de cette grandeur G, où k et pk sont des nombres entiers supérieurs à 1.

En d'autres termes, ces moyennes sont calculées sur des fenêtres temporelles de durées différentes.

Il est alors possible de calculer k valeurs, telles que $S^2_1(G)$ à $S^2_k(G)$, de la variance de la grandeur physique G sur des nombres respectifs différents qk de moyennes différentes, où qk est lui-même un nombre entier supérieur à 1.

Les valeurs de la variance obtenues à partir des moyennes calculées sur des fenêtres temporelles de durée relativement courte sont adaptées à la surveillance des phénomènes relativement rapides, tandis que les valeurs de la variance obtenues à partir des moyennes calculées sur des fenêtres temporelles de durée relativement longue sont adaptées à la surveillance des phénomènes relativement lents.

Pour améliorer encore la qualité de l'évaluation de l'état du pneumatique 1, et notamment pour distinguer entre deux états estimés différents du pneumatique en cas d'alarme, c'est-à-dire en cas de dépassement de la valeur limite L par une valeur calculée de la variance de la grandeur physique G, le procédé de l'invention prévoit en outre de prendre en compte le signe de l'évolution de la grandeur physique G et / ou la vitesse X'(t) du véhicule.

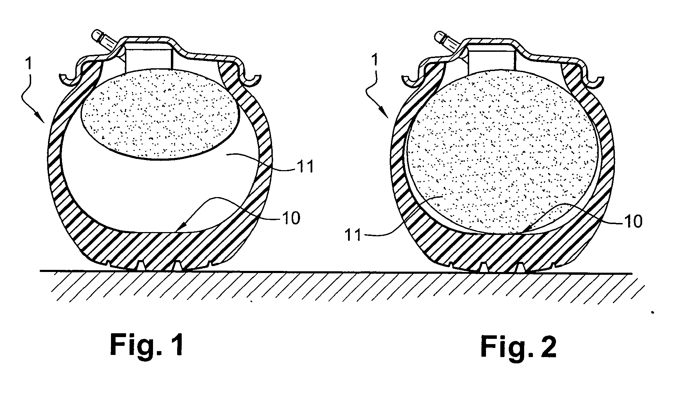

Le procédé de l'invention peut être appliqué non seulement à la surveillance des pneumatiques standard, mais aussi à celle des pneumatiques qui renferment un boudin mousse 11 tel qu'illustré aux figures 1 et 2.

Un boudin mousse est un tore constitué en matériau alvéolaire à cellules fermées tel que présenté notamment dans le document FR 1 450 638. Le matériau alvéolaire est préférentiellement étanche. Les cellules fermées comprennent un gaz sous une pression supérieure à la pression atmosphérique mais inférieure à la pression de gonflage usuelle des pneumatiques. En conséquence, les boudins mousse disposés à l'intérieur de la cavité d'un pneumatique et d'une jante sont à l'état comprimé lorsque la pression dans la cavité est la pression de gonflage usuelle mais se dilatent progressivement jusqu'à pouvoir occuper pratiquement l'ensemble de cette cavité lorsque la pression dans la cavité diminue en raison d'une fuite par exemple.

Dans un pneumatique 1 de ce type, le boudin mousse 11 se trouve dans un état comprimé (figure 1) aussi longtemps que ce pneumatique est dans un état de fonctionnement normal, mais se dilate progressivement en cas de fuite du pneumatique, et peut même venir en contact avec la face interne 10 de ce pneumatique 1 (figure 2) en cas de fuite prolongée.

Dans ces conditions, le remplacement, par dilatation du boudin 11, du volume d'air perdu à l'intérieur du pneumatique 1 rend particulièrement délicate la surveillance d'un éventuel changement d'état de ce pneumatique.

Néanmoins, le procédé de l'invention permet, notamment en choisissant le rapport T/P de la température T du fluide gazeux à sa pression P en tant que grandeur physique G, de produire de façon fiable une alarme indiquant une fuite du pneumatique 1 dans le cas où, à la fois, ce rapport T/P augmente alors que sa variance $S^2_1(G)$ dépasse la valeur limite prédéterminée L.

De même, le procédé de l'invention permet, toujours en choisissant le rapport T/P de la température T du fluide gazeux à sa pression P en tant que grandeur physique G, de produire de façon fiable une alarme indiquant que le pneumatique 1 subit seulement un regonflage dans le cas où, à la fois, ce rapport T/P diminue alors que sa variance $S^2_1(G)$ dépasse la valeur limite prédéterminée L et alors que le véhicule a une vitesse X'(t) nulle.

Le procédé de l'invention permet encore, en choisissant le rapport T/P en tant que grandeur physique G, de produire de façon fiable une alarme indiquant un contact du boudin mousse 11 avec la face interne 10 du pneumatique 1 dans le cas où, à la fois, ce rapport T/P diminue alors que sa variance $S^2_1(G)$ dépasse la valeur limite prédéterminée L et alors que le véhicule a une vitesse X'(t) non nulle.

Dans un mode de réalisation particulier, bien que non nécessaire, une alarme de fuite rapide peut être donnée au constat de la réalisation de la combinaison logique :

(C1 OU (C4 ET C5)) ET (C2 ET C3 ET (C6 OU C7)),

où C1 à C7 sont des conditions qui seront précisées ultérieurement.

De même, une alarme de regonflage peut être donnée au constat de la réalisation de la combinaison logique :

(C1 ET NON-C2 ET NON-C3).

Une alarme de contact du boudin mousse 11 avec la face interne 10 du pneumatique 1 peut être donnée au constat de la réalisation de la combinaison logique :

(C1 ET NON-C2 ET C3) OU (C2 ET C4 ET C8),

la réalisation de la condition (C1 et NON-C2 ET C3) conduisant au déclenchement de l'alarme, et la réalisation de la condition (NON-C2 ET C4 ET C8) provoquant le maintien de l'alarme pour éviter toute éventuelle instabilité due aux imprécisions de mesures.

Les conditions C1 à C8 ont les significations suivantes.

C1 : la variance du rapport T/P dépasse la limite L;

C2 : le rapport T/P augmente;

C3 : la vitesse X'(t) du véhicule n'est pas nulle;

C4 : la variance du rapport T/P dépasse la limite L-e où "e" est une quantité petite devant L, de l'ordre de grandeur des incertitudes de mesure de la grandeur G, et permettant d'introduire une hystérésis dans la production de l'alarme;

C5 : une alarme de fuite rapide a déjà été produite à un instant antérieur;

C6 : une alarme de contact du boudin mousse 11 avec la face interne 10 du pneumatique 1 vient de se produire;

C7 : le temps écoulé depuis une alarme de contact est supérieur à un délai de refroidissement;

Pour éviter les fausses détections de fuite dues à un refroidissement consécutif à un contact du boudin mousse, on introduit en effet un décompte du temps écoulé depuis le dernier contact.

C8 : une alarme de contact du boudin mousse 11 avec la face interne 10 du pneumatique 1 a été produite à l'instant d'échantillonnage précédent;

Pour la mise en place du paramètre "e" d'hystérésis, on vérifie en effet qu'un contact s'est produit à l'instant précédent.

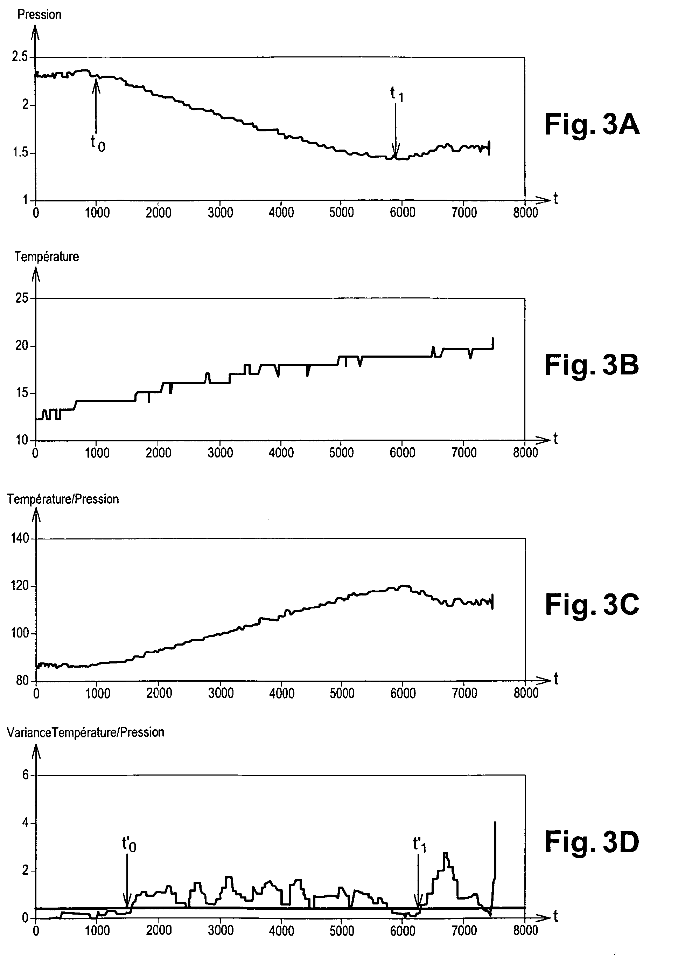

L'application du procédé de l'invention à un cas concret de fuite d'un pneumatique équipé d'un boudin mousse 11 est illustrée aux figures 3A à 3D, la grandeur physique G utilisée étant constituée par le rapport T/P de la température T à la pression P de l'air à l'intérieur de ce pneumatique.

Le temps t, en abscisse de ces diagrammes, est en fait mesuré en nombre d'instants d'échantillonnage.

Lorsqu'une fuite se produit (instant $t_0$ sur la figure 3A), la pression P dans le pneumatique subit une légère baisse, la température T pouvant en revanche ne varier que lentement, dans le sens croissant (figure 3B).

Le rapport T/P (figure 3C) subit donc lui aussi une croissance relativement lente.

En revanche, la variance du rapport T/P (figure 3D) présente très rapidement des variations relatives très importantes, et dépasse le seuil limite L, en l'occurrence fixé à 0.5, à un instant $t'_0$ qui suit de très près l'instant $t_0$ du début de la fuite, l'alarme de fuite pouvant ainsi être donnée alors même que la température T n'a pas encore évolué.

A l'instant $t_1$, le boudin 11 vient en contact avec la face interne du pneu 1.

Peu après, le rapport T/P, amorce une décroissance.

A l'instant $t'_1$, la variance du rapport T/P, après avoir décru, dépasse à nouveau le seuil limite L.

La conjonction de la décroissance du rapport T/P et du dépassement du seuil L par sa variance permet, à cet instant $t'_1$, de délivrer une alarme de contact du boudin 11 avec la face interne 10 du pneu 1.

**Revendications**

1. Procédé de surveillance de l'état opérationnel d'un pneumatique (1) équipant un véhicule, ce procédé comprenant au moins les étapes consistant à produire, au cours du temps, des échantillons (G(n)) représentatifs de valeurs successives prises par une grandeur physique (G) évoluant, à des conditions par ailleurs égales, en fonction du nombre de moles (N) de fluide gazeux présentes dans ce pneumatique (1), à exploiter ces échantillons pour en déduire un état estimé du pneumatique (1) et le comparer à un domaine de conditions normales de roulement, et à produire une alarme dans le cas où l'état estimé du pneumatique (1) se situe en dehors du domaine de ces conditions normales, **caractérisé en ce que** l'étape d'exploitation des échantillons comprend au moins une opération consistant à comparer un indicateur de dispersion de ladite grandeur physique (G) à une valeur limite prédéterminée (L), **en ce que** la grandeur physique (G) est constituée par le rapport (T/P) de la température (T) du fluide gazeux à sa pression (P) et **en ce que** l'alarme indique une fuite du pneumatique (1) au moins dans un cas où, à la fois, la grandeur physique (G) augmente alors que sa variance ($S^2_1$(G)) dépasse la valeur limite prédéterminée (L).

2. Procédé de surveillance suivant la revendication 1, **caractérisé en ce que** ladite grandeur physique (G) est choisie dans l'ensemble comprenant la pression (P) du fluide gazeux, le rapport (T/P) de la température (T) du fluide gazeux à sa pression (P), et le rapport (P/T) de la pression (P) du fluide gazeux à sa température (T).

3. Procédé de surveillance suivant l'une quelconque des revendications précédentes, **caractérisé en ce que** l'étape d'exploitation des échantillons (G(n)) comprend des opérations préalables de mise en forme consistant à calculer au moins une moyenne ($M_{1j}$) sur p1 échantillons successifs de la grandeur physique, et à calculer une valeur glissante ($S^2_1$(G)) de l'indicateur de dispersion de la grandeur physique (G) sur q1 moyennes, p1 et q1 étant des nombres entiers supérieurs à 1.

4. Procédé de surveillance suivant la revendication 3, **caractérisé en ce que** chaque nouveau calcul de la moyenne ($M_{lj}$) est effectué sur p1 nouveaux échantillons (G(n)) de la grandeur physique, différents des p1 échantillons utilisés pour le calcul précédent de cette moyenne, et **en ce que** la valeur glissante de l'indicateur de dispersion de la grandeur physique est recalculée à chaque nouveau calcul de la moyenne.

5. Procédé de surveillance suivant l'une quelconque des revendications précédentes combinée à la revendication 3, **caractérisé en ce que** l'étape d'exploitation des échantillons (G(n)) comprend des opérations préalables de mise en forme consistant à calculer en parallèle k moyennes ($M_{lj}$ - $M_{kj}$) sur des nombres respectifs différents pk d'échantillons successifs (G(n)) de la grandeur physique (G), et à calculer k valeurs glissantes ($S^2_1(G)$ - $S^2_k(G)$) de l'indicateur de dispersion de la grandeur physique (G) sur des nombres respectifs différents qk de moyennes différentes, k, pk et qk étant des nombres entiers supérieurs à 1.

6. Procédé de surveillance suivant l'une quelconque des revendications précédentes, **caractérisé en ce que** l'étape d'exploitation des échantillons (G(n)) comprend en outre une opération consistant à prendre en compte le signe de l'évolution de la grandeur physique (G) et / ou la vitesse (X'(t)) du véhicule pour distinguer, en cas d'alarme, entre deux états estimés différents du pneumatique (1).

7. Procédé de surveillance suivant l'une quelconque des revendications précédentes, **caractérisé en ce que** l'indicateur de dispersion de la grandeur physique (G) est constituée par la variance ($S^2_1(G)$) ou par l'écart-type de cette grandeur.

8. Procédé de surveillance suivant l'une quelconque des revendications précédentes, **caractérisé en ce que** la grandeur physique (G) est constituée par le rapport (T/P) de la température (T) du fluide gazeux à sa pression (P) et **en ce que** l'alarme indique un regonflage du pneumatique (1) au moins dans un cas où, à la fois, la grandeur physique (G) diminue alors que sa variance ($S^2_1$ (G)) dépasse la valeur limite prédéterminée (L) et que le véhicule a une vitesse (X'(t)) nulle.

9. Procédé de surveillance suivant l'une quelconque des revendications précédentes, **caractérisé en ce qu'**il est appliqué à un pneumatique (1) renfermant un boudin mousse (11) susceptible de venir en contact avec la face interne (10) de ce pneumatique (1).

10. Procédé de surveillance suivant la revendication 9, **caractérisé en ce que** la grandeur physique est constituée par le rapport (T/P) de la température (T) du fluide gazeux à sa pression (P) et **en ce que** l'alarme indique un contact du boudin mousse (11) avec la face interne (10) du pneumatique (1) au moins dans un cas où, à la fois, la grandeur physique (G) diminue alors que sa variance ($S^2_1$ (G)) dépasse la valeur limite prédéterminée (L) et que le véhicule a une vitesse (X'(t)) non nulle.

**Fig. 1**

**Fig. 2**

Fig. 3A

Fig. 3B

Fig. 3C

Fig. 3D

**Office européen
des brevets**

Numéro de la demande

EP 07 29 0509

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 246 317 B1 (PICKORNIK WILLIAM [US] ET AL) 12 juin 2001 (2001-06-12)<br>* abrégé; figure 4 *<br>* colonne 6, ligne 43 - ligne 67 *<br>----- | 1-10 | INV.<br>B60C23/20<br>B60C23/00 |
| A | EP 1 516 753 A1 (INFINEON TECHNOLOGIES AG [DE]) 23 mars 2005 (2005-03-23)<br>* abrégé; figure 5c *<br>----- | 1-10 | |

**DOMAINES TECHNIQUES RECHERCHES (IPC)**

B60C

Le présent rapport a été établi pour toutes les revendications

| Lieu de la recherche | Date d'achèvement de la recherche | Examinateur |
|---|---|---|
| Munich | 17 juillet 2007 | Gaillard, Alain |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 29 0509

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2007

| Document brevet cité au rapport de recherche | Date de publication | Membre(s) de la famille de brevet(s) | Date de publication |
|---|---|---|---|
| US 6246317 B1 | 12-06-2001 | AUCUN | |
| EP 1516753 A1 | 23-03-2005 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2622845
- US 6246317 B
- FR 1450638